# EUROPÄISCHE PATENTSCHRIFT

(11) **EP 1 920 812 B1**
(45) Veröffentlichungstag und Bekanntmachung des Hinweises auf die Patenterteilung: **17.11.2010**
(21) Anmeldenummer: 06123937.2
(22) Anmeldetag: 13.11.2006
(51) Int. Cl.: B01D 24/20, B01D 24/46, B65G 65/04, E21D 9/12

(54) **Vorrichtung und Verfahren zum Abräumen und Abtransportieren von insbesondere einer Sandschicht und zum Entfernen von Algenteppichen in Filterbecken**
Apparatus and process for gathering and transporting of in particular a sand layer and for removing layers of alga in filter basins
Dispositif et procédé de ramasser et transporter en particulier d'une couche de sable et d'enlever des couches d'algues dans des bassins de filtrage

(43) Veröffentlichungstag der Anmeldung: 14.05.2008
(73) Patentinhaber: Doppstadt, Ferdinand, 42555 Velbert (DE)
(72) Erfinder: Doppstadt, Ferdinand, 42555 Velbert (DE)
(74) Vertreter: Weisse, Renate

(56) Entgegenhaltungen:
- EP-A1- 0 310 221
- DE-A1- 2 041 803
- DE-A1- 2 719 484
- DE-A1- 3 911 308
- GB-A- 2 016 561
- US-A- 1 855 998
- US-A- 1 862 230
- US-A- 2 559 829
- US-A- 4 159 055

## Beschreibung

### Technisches Gebiet

Die Erfindung betrifft eine Vorrichtung zum Entfernen von zusammenhängenden Algenteppichen bei der Reinigung von Filterbecken zur Trinkwasseraufbereitung mit einem Fahrzeug, an dem eine Räumvorrichtung zum Aufnehmen und Abtransportieren, insbesondere einer Sandschicht vorgesehen ist.

Ferner betrifft die Erfindung ein Verfahren zum Reinigen von Filterbecken bei der Trinkwasseraufbereitung mit einer Vorrichtung der eingangs genannten Art und folgenden Verfahrensschritten:
a) Aufnehmen einer Sandschicht mit einer Räumvorrichtung,
b) Abtransport der Sandschicht mit einer Fördereinrichtung.

### Stand der Technik

Zur Aufbereitung von Trinkwasser aus Flüssen oder sonstigen Gewässern werden große Filterbecken verwendet. Der Boden eines Filterbeckens besteht aus einer starken Sandschicht, an die sich unten eine Kiesschicht anschließt. Zu reinigendes Wasser wird in das Filterbecken eingeleitet und versickert durch die Sand- und die Kiesschicht. Im unteren Teil der Kiesschicht wird das gereinigte Wasser über Rohre abgepumpt. Verunreinigungen des Wassers werden hauptsächlich von dem oberen Teil der Sandschicht zurückgehalten. Es bildet sich dadurch an der Oberfläche der Sandschicht eine Schicht aus Schmutz und Schlamm. In dieser Schicht lagern sich außerdem Algen ab, so dass schließlich eine dichte und zusammenhängende Oberflächenschicht entsteht, die den weitem Durchtritt des aufzubereitenden Wassers behindert. Das Filterbecken muss daher von Zeit zu Zeit entleert werden. Anschließend wird diese Oberflächenschicht des Filterbeckens zur Reinigung bzw. Entsorgung aufgenommen und abtransportiert.

Da die Algen überwiegend im Wasser wachsen, bildet sich bei einer Entleerung des Filterbeckens ein dichter und zusammenhängender Algenteppich. Die aufzunehmende Oberflächenschicht besteht daher aus einer oberen und eine unteren Teilschicht. Die obere Teilschicht der aufzunehmenden Oberflächenschicht wird im Wesentlichen aus Algen gebildet. Die untere Teilschicht besteht aus Schmutz, Schlamm und Sand. Bei einer Reinigung eines Filterbeckens zur Aufbereitung von Trinkwasser muss die gesamte Oberflächenschicht, d.h. beide Teilschichten aufgenommen und abtransportiert werden. Je nach der Stärke eines Algenbefalls kann der Algenteppich erhebliche Ausmaße annehmen.

Die DE 20 41 803 A1 beschreibt eine Vorrichtung zum Abtragen von Sinkstoffen in Sickerbecken von Wassergewinnungsanlagen. Zwischen zwei Raupenfahrzeugen befindet sich ein verfahrbares Gestell mit einem Gleitblech, das die abzuhebende Schicht abschält.

Die US-A-1 862 230 beschreibt eine Räum- und Abtransport- Vorrichtung bestehend aus einer Beladevorrichtung, einer Einsammelvorrichtung und einem Förderband. Die Vorrichtung sammelt lose Materialien wie Kohle, Kies und Sand zusammen und transportiert diese auf ein Förderband.

Die Aufnahme und der Abtransport der Oberflächenschicht durch eine an einem Fahrzeug montierte Räumvorrichtung sind bekannt. In der Patentschrift DE 22 39 385 wird eine Vorrichtung zum Reinigen von Filterbecken mit einem auf dem Filterbeckenboden fahrendem Fahrzeug beschrieben. Dem Fahrzeug läuft eine Räumvorrichtung voraus, durch welche die Oberflächenschicht aufgenommen wird. Nach der Lehre des Patents DE 22 39 385 wird die Aufnahme einer Oberflächenschicht genau definierter Dicke ermöglicht. Dazu ist die Räumvorrichtung um eine in Fahrtrichtung verlaufende Achse beweglich angeordnet. An beiden Seiten der Räumvorrichtung sind Höhenfühler zur Bestimmung der Lage der Räumvorrichtung relativ zum Filterbeckenboden vorgesehen. Mittels der Höhenfühler werden Stellmotore zur Ausrichtung der Räumvorrichtung relativ zum Filterbeckenboden gesteuert. Von der Räumvorrichtung aufgenommenes Material der Oberflächenschicht wird noch während der Aufnahme weiteren Materials über ein Förderband zu einem anderen Fahrzeug, beispielsweise einem LKW transportiert.

Die, der Familie von DE 22 39 385 angehörenden Patenschriften DE 27 19 484 und DE 27 60 321 offenbaren weitere Ausgestaltungen einer Vorrichtung zum Reinigen von Filterbecken bei der Trinkwasserbereitung. Die DE 27 19 484 beschreibt ein zusätzliches Putzrad zum Reinigen von Filterbeckenränder. Die DE 27 60 321 sieht weitere, teilweise beweglich eingebaute Förderbänder vor, so dass ein Lastkraftwagen zur Aufnahme des abgetragenen Materials wahlweise auf der rechten oder auf der linken Seite der Vorrichtung fahren kann.

Je nach Algenbefall entsteht bei einem Entleeren eines Filterbeckens ein entsprechend dicker Algenteppich. Nachteilig bei den bekannten Vorrichtungen zum Reinigen eines Filterbeckens ist, dass der Algenteppich bei einem starken Algenbefall erhebliche Ausmaße annehmen und dadurch den Betrieb beeinträchtigen oder gar unmöglich machen kann. Aufgenommene Teile des Algenteppichs können beispielsweise die Räumvorrichtung oder enthaltene Transportvorrichtungen verstopfen oder dermaßen belasten, dass Beschädigungen auftreten. In einem solchen Fall muss der Algenteppich vor einem Einsatz der bekannten Vorrichtungen arbeitsaufwendig entfernt oder ganz auf den Einsatz dieser Vorrichtungen verzichtet werden. Dabei wird der Filterbeckenboden durch die Aufnahme des Algenteppichs erheblich aufgewühlt. Die Aufnahme einer verschmutzten Sandschicht in genau definierter Dicke ist unmöglich und es wird mehr Sand als nötig abgetragen. Dies ist für einen Betreiber von solchen Trinkwasseranlagen sehr unwirtschaftlich.

Weiterhin haben die bekannten Vorrichtungen zum Reinigen von Filterbecken den Nachteil, dass Algen und verschmutzter Sand gleichzeitig aufgenommen und abtransportiert werden. Dadurch entsteht ein Gemenge aus Algen, Sand, Schlamm und Schmutz, welches als solches kaum weiterverwendet werden kann. Das Gemenge muss entweder kostspielig und umweltbeeinträchtigend entsorgt oder aufwendig getrennt werden. Zur Trennung des Gemenges sind neben dem Arbeitsaufwand auch zusätzliche, Kosten verursachende und Arbeitsplatz beanspruchende Vorrichtungen notwendig.

### Offenbarung der Erfindung

Aufgabe der Erfindung ist es daher, die zuvor genannten Nachteile des Standes der Technik zu vermeiden und eine Vorrichtung bzw. ein Verfahren zu schaffen, mit dem einen Algenteppich in einem Filterbecken schnell und wirtschaftlich aufgenommen werden kann.

Erfindungsgemäß wird die Aufgabe dadurch gelöst, dass bei einer Vorrichtung der eingangs genannten Art ein im wesentlich quer zum Fahrzeug angeordneter Schieber zum Zusammenschieben des Algenteppichs angebracht ist, wobei der Schieber als Kamm ausgebildet ist.

Weiterhin wird die Aufgabe durch ein Verfahren der eingangs genannten Art mit dem weiteren Verfahrensschritt gelöst:
c) der Algenteppich wird mit einem als Kamm ausgebildeten Schieber zu einer Wulst zusammengeschoben.

Die Erfindung beruht auf dem Prinzip, dass ein Algenteppich während der Aufnahme der verschmutzten Sandschicht nicht ebenfalls aufgenommen wird, sondern durch den Kamm vor der Räumvorrichtung hergeschoben wird. Während die verschmutzte Sandschicht durch die Räumvorrichtung aufgenommen und abtransportiert wird, schiebt der Kamm den Algenteppich zu Algenwulste zusammen. Diese werden in einem weiteren Arbeitsschritt unabhängig von der verschmutzten Sandschicht aufgenommen und abtransportiert.

Somit ist auch bei einem starken Algenteppich eine Sandschicht genau in einer vorgegebenen Dicke aufnehmbar. Ein Betrieb der Vorrichtung zum Reinigen eines Filterbeckens wird nicht durch zusätzlich zum verschmutzten Sand aufgenommene Teile des Algenteppichs beeinträchtigt oder gefährdet. Verstopfungen oder Beschädigungen einer in der Vorrichtung enthaltenen Räum- oder Transportvorrichtung werden verhindert. Da ein Algenteppich gleichzeitig mit der Aufnahme einer verschmutzten Sandschicht zusammen geschoben wird und die Algenwulste sich anschließend zügig entfernen lassen, ist mit der erfindungsgemäßen Vorrichtung eine schnelle Reinigung eines stark veralgten Filterbeckens möglich. Dabei wird der Filterbeckenboden kaum aufgewühlt und es wird nur soviel Sand wie nötig abgetragen. Die erfindungsgemäße Vorrichtung arbeitet daher sehr wirtschaftlich.

Ferner entsteht durch eine Trennung des Algenteppichs von der durch Schmutz und Schlamm verunreinigten Sandschicht bereits während der Aufnahme kein Gemenge aus Algen, Schmutz, Schlamm und Sand. Somit entfällt eine kostspielige und umweltbeeinträchtigende Entsorgung oder eine aufwendig Trennung eines solchen Gemenges. Der verschmutzte Sand kann beispielweise einfacher gereinigt und in dem Filterbecken wiederverwendet werden. Auch eine anderweitige Verwendung des verschmutzten Sandes ist ohne störende Algen besser möglich. Ebenso wird eine Weiterverarbeitung der Algen ohne nennenswerten Sand- und Schmutzanteil wesentlich vereinfacht. Die Algen können z.B. leichter kompostiert werden. Aus diesen Gründen ist mit der Trennung von Algen und verschmutztem Sand während der Aufnahme eine kostengünstige und umweltgerechte Reinigung von Filterbecken besser als bisher möglich.

In einer vorteilhaften Ausgestaltung der erfindungsgemäßen Vorrichtung zum Entfernen von zusammenhängenden Algenteppichen bei der Reinigung von Filterbecken ist der als Kamm ausgebildete Schieber höhenverstellbar ausgebildet. Je nach Dicke der aufzunehmenden, verschmutzten Sandschicht liegt der Algenteppich an der Räumvorrichtung erst ab einer bestimmten Höhe vor. Der höhenverstellbare Kamm ist so einstellbar, dass er nicht zu tief in die aufzunehmende Sandschicht eingreift und diese aufwühlt. Das würde zu einer unnötigen Vermengung von Sand und Algenteppich führen. Andererseits erfasst ein zu hoch montierter Kamm den Algenteppich nur unvollständig. Durch die Höhenverstellbarkeit des Kamms ist dieser optimal auf die aufzunehmende Oberflächenschicht aus verschmutztem Sand und Algenteppich einstellbar. Ferner ist eine gleichzeitige Aufnahme von Algenteppich und verschmutzter Sandschicht bei entsprechend hoch eingestelltem Kamm möglich, falls dieses gewünscht wird.

Bei einer weiteren bevorzugten Ausbildung der erfindungsgemäßen Vorrichtung zum Reinigen von Filterbecken weist der Schieber Trennmittel zum Zerteilen des Algenteppichs auf. Durch das Zerteilen des Algenteppichs, beispielsweise an den Rändern der Räumvorrichtung lassen sich die Algen besser von dem Schieber vor der Räumvorrichtung herschieben. Der Algenteppich wird dabei nicht von dem Schieber zerrissen. Durch ein Zerreißen des Algenteppichs wird der als Kamm ausgebildete Schieber stark belastet. Außerdem kann beim Zerreißen eine Vermengung von Sand und Algen stattfinden. Durch die Trennmittel am Schieber werden diese ungünstigen Umstände vermieden.

Gemäß einer zweckmäßigen Ausgestaltung der Erfindung ist der als Kamm ausgebildete Schieber lös- und entfernbar an dem Fahrzeug angebracht ist. Einerseits wird durch die Lösbarkeit des Schiebers eine einfache Wartung oder ein Ersatz bei Beschädigung möglich. Dabei bleibt das Fahrzeug mit der Räumvorrichtung zur Verrichtung anderer Arbeiten einsatzbereit. Weiterhin ermöglicht eine Entfernung des Schiebers die Aufnahme von Algen, insbesondere Algenwulste durch die Räumvorrichtung. Die Vorrichtung zum Reinigen von Filterbecken ist damit sehr effizient auch zur Aufnahme von Algenwulste einsetzbar. Zusätzliche Vorrichtungen bzw. Geräte zur Aufnahme der Algenwulste werden nicht benötigt.

Dazu ist bei einer weiteren vorteilhaften Ausgestaltung der Erfindung die Räumvorrichtung zum Aufnehmen des zusammengeschobenen Algenteppichs ausgebildet. So ist mit ein und derselben Räumvorrichtung sowohl die Aufnahme von verschmutztem Sand als auch die Aufnahme von zusammengeschobenen Algen bzw. Algenwulste durchführbar. Eine kostspielige Aufbietung, Wartung und Unterstellung weiterer Arbeitsgeräte entfällt. Zudem erfolgt die Reinigung eines Filterbeckens zügig und ohne Unterbrechung durch eine Umstellung auf andere Arbeitsgeräte.

In einer bevorzugten Ausgestaltung der erfindungsgemäßen Vorrichtung zum Entfernen von zusammenhängenden Algenteppichen bei der Reinigung von Filterbecken ist die Räumvorrichtung höhenverstellbar ausgebildet. Durch die höhenverstellbare Räumvorrichtung ist die Dicke einer aufzunehmenden Oberflächenschicht, bestehend aus einer verschmutzten Sandschicht und einem darüber liegenden Algenteppich, präzise einstellbar. Je nach Verschmutzung ist die aufzunehmende Oberflächenschicht unterschiedlich dick. Eine unnötige Aufnahme von sauberem, unter der Oberflächenschicht liegendem Sand wird verhindert. Insbesondere ist die Räumvorrichtung in der Höhe so einstellbar, das nur Algen bzw. Algenwülste und kein darunter liegender Sand aufgenommen wird. Die Vermengung von Sand und Algen bei der Aufnahme der Algewülste wird vermieden.

Bei einer weiteren nützlichen Ausbildung der Erfindung zur Reinigung von Filterbecken weist die Räumvorrichtung eine Fördereinrichtung, insbesondere ein Förderband, zum Abtransport von Algen auf. Mit der Fördereinrichtung werden die Algen während eines Aufnahmevorgangs beispielsweise zu einem Lastkraftwagen abtransportiert. Es werden dazu keine weiteren Geräte benötigt. Bei einem Einsatz von mehreren LKW muss der Aufnahmevorgang zum Abtransport der Algen nicht unterbrochen werden. Die Reinigung eines Filterbeckens wird mit einer deutlichen Zeitersparnis durchgeführt.

Ferner sind bei einer vorteilhaften Ausgestaltung der Erfindung zur Reinigung von Filterbecken Mittel zum Aufbereiten für einen Transport und/oder eine Lagerung der Algen vorgesehen. Mit diesen Mitteln werden die Algen bereits in der erfindungsgemäßen Vorrichtung für den Transport oder die Lagerung aufbereitet. Beispielsweise kann eine weitere Zerkleinerung, Pressung oder Trocknung der Algen vorgesehen sein. Der Transport der Algen erfolgt ebenso wie die Lagerung durch eine, das Volumen oder das Gewicht reduzierende Aufbereitung effektiver und preiswerter. Auch eine weitere, für die Lagerung notwendige oder günstige Aufbereitung der Algen kann bereits während der Aufnahme erfolgen. So wird eine spätere Aufbereitung der Algen mit zusätzlichem Zeit- und Geräteaufwand vermieden.

Bei einer effektiven Weiterbildung des erfindungsgemäßen Verfahrens zum Reinigen von Filterbecken bei der Trinkwasseraufbereitung wird der Algenteppich mit Trennmitteln beim Zusammenschieben zerteilt. Durch das Zerteilen des Algenteppichs muss die Räumvorrichtung den Algenteppich nicht zerreißen. Die Algen lassen sich besser und ordentlicher von dem Schieber zusammenschieben, ohne das es dabei zu einer Vermengung von Schmutz, Sand und Algen kommt, wie es beim Zerreißen passieren kann. Je ordentlicher die Algen zu Algenwulste zusammen geschoben werden, desto einfacher und schneller gelingt später die Aufnahme der Algenwulste. Außerdem wird durch ein Zerreißen des Algenteppichs der als Kamm ausgebildete Schieber stark belastet. Das Zerteilen des Algenteppichs reduziert diese Belastung und damit auch entsprechende Wartungsarbeiten am Kamm.

In einer weiteren vorteilhaften Variante des erfindungsgemäßen Verfahrens zum Reinigen von Filterbecken wird die zusammengeschobene Algenwulst mit der Räumvorrichtung aufgenommen und/oder mit einer Fördereinrichtung abtransportiert. Da die Räumvorrichtung neben der Aufnahme der verschmutzten Sandschicht auch zur Aufnahme der Algenwulste verwendet wird, ist der gesamte Reinigungsvorgang eines Filterbeckens kostengünstig und schnell mit ein und derselben Vorrichtung durchführbar. Es werden keine zusätzlichen Geräte mehr benötigt. Auch der Abtransport der Algen ist bereits während der Aufnahme der Algenwulst möglich, ohne den Aufnahmevorgang zu unterbrechen.

Weitere Vorteile ergeben sich aus dem Gegenstand der Unteransprüche, sowie den Zeichnungen mit den dazugehörigen Beschreibungen.

### Kurze Beschreibung der Zeichnung

- Fig. 1: zeigt in einer schematischen Prinzipskizze ein erstes Ausführungsbeispiel einer Vorrichtung zum Entfernen von zusammenhängenden Algenteppichen bei der Reinigung von Filterbecken.
- Fig. 2: zeigt in einer schematischen Prinzipskizze einen Ausschnitt einer Räumvorrichtung mit einem als Kamm ausgebildeten Schieber der Vorrichtung nach Fig. 1.
- Fig. 3: zeigt in einer schematischen Prinzipskizze die Vorrichtung nach Fig. 1 bei einem Zusammenschieben eines Algenteppichs.
- Fig. 4: zeigt in einer schematischen Prinzipskizze die Vorrichtung nach Fig. 1 bei einer Aufnahme einer Algenwulst.

### Bevorzugtes Ausführungsbeispiel

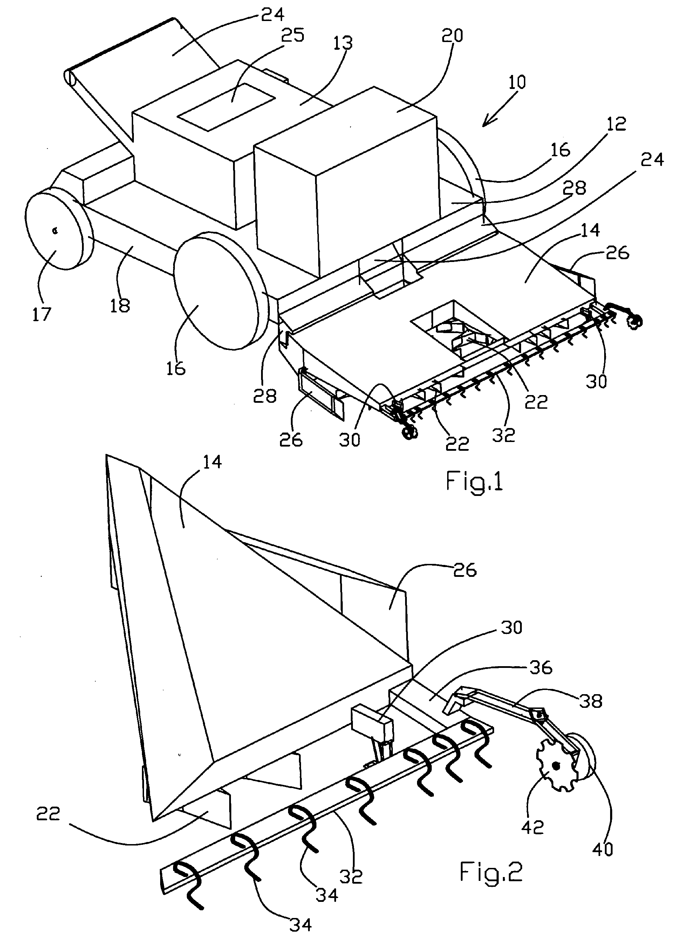

In Fig. 1 wird mit 10 eine Vorrichtung zum Entfernen von zusammenhängenden Algenteppichen bei einer Reinigung von Filterbecken zur Trinkwasseraufbereitung gezeigt. Die Vorrichtung 10 besteht aus einem Fahrzeug 12 und einer, in der Höhe beweglich an dem Fahrzeug 12 befestigten Räumvorrichtung 14. Das Fahrzeug 12 verfügt über ein Paar Vorderräder 16 und ein Paar Hinterräder 17. Alternativ ist auch eine Verwendung von weiteren Rädern oder Antriebsketten möglich. Auf einer Fahrzeugplattform 18 ist eine Fahrerkabine 20 mit üblichen Steuermitteln angeordnet. Die mechanisch, hydraulisch oder elektronisch ausgebildeten Steuermittel ermöglichen einem Fahrer eine Steuerung der Vorrichtung 10. Zum Antrieb des Fahrzeugs 12 dient ein Dieselmotor 13 mit in Fig. 1 nicht dargestellten Hydraulikpumpen. Weitere Ausführungen können aber beispielsweise auch Benzin-, Elektro- oder Gasmotoren enthalten.

Die Räumvorrichtung 14 enthält an umlaufende Bänder oder Ketten befestigte Schaufeln 22. Die Schaufeln 22 laufen fortwährend zur Mitte der Räumvorrichtung hin und schaben dabei eine aufzunehmende Schicht aus Sand, Schlamm und Schmutz von dem Filterbeckenboden ab. Auch eine Aufnahme von Algenwulste ist mittels der Schaufeln 22 möglich. In der Mitte der Räumvorrichtung 14 wird das abgeschabte Material von einem Förderband 24 aufgenommen und an das hintere Ende der Vorrichtung 10 transportiert. In der Vorrichtung 14 sind weitere Mittel 25 zur Aufbereitung von aufgenommenen Algen vorgesehen.

Damit bei einer Aufnahme von verschmutztem Sand durch die Räumvorrichtung 14 kein Material zur Seite austritt, verfügt die Räumvorrichtung 14 jeweils an beiden Seiten über eine Führung 26. Um die Dicke einer aufzunehmenden Sandschicht genau festzulegen, ist die Räumvorrichtung 14 mittels Hydraulikelemente 28 in der Höhe verstellbar ausgeführt. Durch Höhenfühler 30 wird während eines Aufnahmevorgangs kontinuierlich die Dicke einer aufgenommenen Sandschicht gemessen und gegebenenfalls die Höhe der Räumvorrichtung 14 mittels der Hydraulikelemente 28 korrigiert. Vor den Schaufeln 22 ist an der Räumvorrichtung 14 ein als Kamm ausgebildeter Schieber 32 zum Schieben eines Algenteppichs befestigt.

In Fig. 2 wird ein Ausschnitt der Räumvorrichtung 14 aus Fig. 1 zur deutlicheren Darstellung des Schiebers 32 gezeigt. Gleiche Bestandteile werden daher auch mit entsprechenden Bezugszeichen bezeichnet. Der Schieber 32 enthält eine Vielzahl von Zähnen 34, welche in einen Algenteppich greifen und diesen vor sich herschieben, ohne Sand oder Schmutz mitzunehmen. Die Zähne 34 sind einfach und einzeln lösbar an dem Schieber 32 befestigt, um einen schnellen Austausch beschädigter Zähne 34 zu ermöglichen.

Der Schieber 32 ist an beiden Seiten in der Höhe beweglich mit Befestigungsmitteln 36 an der Räumvorrichtung 14 einfach lösbar befestigt. Falls ein Schieben von Algen nicht erwünscht wird, wie z.B. bei einer Aufnahme von Algenteppichen, ist der Schieber 32 mit den Befestigungsmitteln 36 einfach zu entfernen. Weiterhin ist an beiden Seiten des Schiebers 32 oder der Befestigungsmittel 36 ein Verstellmechanismus 38 montiert. Am anderen Ende des Verstellmechanismus 38 ist ein Stützrad 40 befestigt. Das Stützrad 40 rollt über den Filterbeckenboden und hält den in der Höhe beweglichen Schieber 32 über den Verstellmechanismus 38 exakt in einer voreingestellten Höhe zum Algenteppich. Dadurch wird gewährleistet, dass die Höhe des Schiebers 32 optimal auf die Dicke eines Algenteppichs einstellbar ist.

Der als Kamm ausgebildete Schieber 32 greift einerseits nicht zu tief in die unter dem Algenteppich liegende Sandschicht ein. Andererseits wird verhindert, dass durch einen zu hoch angebrachten Schieber 32 der Algenteppich nur unvollständig zusammengeschoben wird. Zur Einstellung der Höhe des Schiebers 32 ist der Verstellmechanismus 38 entweder manuell oder beispielsweise mit einem Hydraulikelement oder einem Elektromotor verstellbar ausgebildet. Bei einer Variante der Räumvorrichtung kann der Verstellmechanismus 38 den Schieber 32 so hoch über den Filterbeckenboden halten, dass eine Aufnahme dicker Algenwuste möglich ist.

Gegenüber den auf beiden Seiten des Schiebers 32 vorhandenen Stützrädern 40 ist jeweils eine Trennscheibe 42 vorgesehen. Die Trennscheiben 42 zerschneiden den Algenteppich an den Enden des Schiebers 32. Damit wird ein sauberes Zusammenschieben des Algenteppichs zu Algenwulste möglich. Der Algenteppich muss nicht durch den Schieber 32 zerrissen werden. Ein Zerreißen eines Algenteppichs belastet zum einen den Schieber 32 mit den Zähnen 34 außerordentlich. Zum anderen kann durch das Zerreißen eine unerwünschte Vermengung von Sand, Schmutz und Algen auftreten.

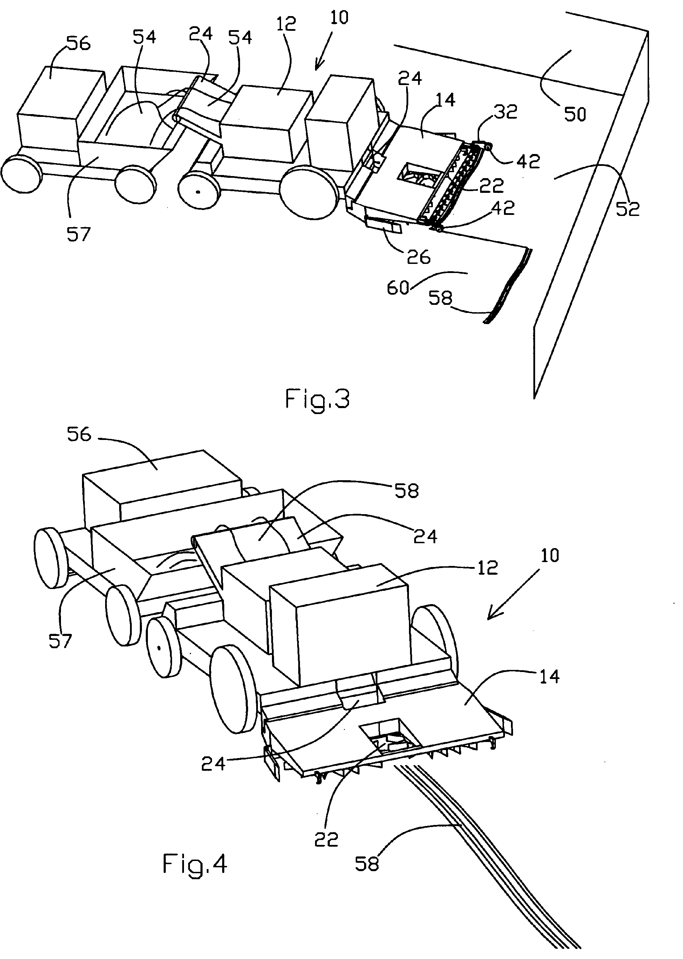

Fig. 3 und Fig. 4 zeigen eine Vorrichtung 10 entsprechend nach Fig. 1 und Fig. 2 bei der Reinigung eines Filterbeckens 50. Gleiche Bestandteile werden daher auch mit entsprechenden Bezugszeichen bezeichnet.

In Fig. 3 fährt die als Fahrzeug 12 mit einer Räumvorrichtung 14 und einem Schieber 32 ausgestaltete Vorrichtung 10 auf dem Boden eines entleerten Filterbeckens 50. Ein auf einer verschmutzten Sandschicht liegender Algenteppich 52 wird dabei mit den Trennscheiben 42 zerteilt und mit dem als Kamm ausgebildeten Schieber 32 zu Algenwulste 58 zusammen geschoben. Gleichzeitig nimmt die Räumvorrichtung 14 mittels der Schaufeln 22, der seitlichen Führungen 26 und der in Fig. 2 gezeigten Höhenfühler 30 ein Schicht aus Schlamm, Schmutz und Sand genau in einer vorgegebenen Dicke auf und transportier den verschmutzten Sand 54 über ein Förderband 24 an das hintere Ende der Vorrichtung 10. Dort fällt der verschmutzte Sand 54 auf eine Ladefläche 57 eines hinter der Vorrichtung 10 herfahrenden Lastkraftwagens 56 und kann abtransportiert werden.

Durch das Zusammenschieben des Algenteppichs 52 wird eine Aufnahme der verschmutzten Sandschicht in einer vorgegebenen Dicke auch bei starken Algenteppichen einfach möglich. Die Räumvorrichtung 14 und das Förderband 24 werden nicht durch zusätzlich zum Sand 54 aufgenommene Teile des Algenteppichs 52 belastet, verstopft oder gar beschädigt. Das gleichzeitig mit der Aufnahme des verschmutzten Sands 54 durchgeführte Zusammenschieben des Algenteppichs 52 erlaubt ein schnelles und wirtschaftliches Reinigen des Filterbeckens 50 mit ein und derselben Vorrichtung 10. Außerdem werden Algenteppich 52 und verschmutzter Sand 54 schon bei der Aufnahme getrennt und können anschließend einfacher und kostengünstiger weiterverarbeitet werden.

In Fig. 4 wird die Vorrichtung 10 zum Reinigen eines Filterbeckens 50 bei einer Aufnahme einer Algenwulst 58 gezeigt. Dazu fährt die als Fahrzeug 12 ausgeführte Vorrichtung 10 in Längsrichtung einer Algenwulst 58. Die höhenverstellbare Räumvorrichtung 14 ist so eingestellt, dass kein verschmutzter Sand 54 sondern nur die Algenwulst 58 aufgenommen wird. Der mit den in Fig. 2 gezeigten Befestigungsmitteln 36 lösbar an der Räumvorrichtung 14 befestigte Schieber 32 ist entfernt worden, um eine ungestörte Aufnahme der Algenwulst 58 zu ermöglichen. Alternativ kann der höhenverstellbare Schieber 32 mittels des ebenfalls in Fig. 2 gezeigten Verstellmechanismus 38 so hoch eingestellt werden, dass er die Aufnahme der Algenwulst 58 nicht behindert.

Mit den in der Räumvorrichtung 14 vorgesehenen Schaufeln 22 wird die Algenwulst 58 aufgenommen und durch das Förderband 24 zum hinteren Ende der Vorrichtung 10 transportiert. Dabei kann die aufgenommene Algenwulst mit in Fig. 1 gezeigten Mitteln 25 zum Transport und zur Lagerung aufbereitet werden. Beispielsweise ist durch eine weitere Zerkleinerung, Pressung oder Trocknung eine Gewicht- und/oder Volumenreduzierung erreichbar. Der Transport und die Lagerung von Algen werden so einfacher und ökonomischer möglich. Am hinteren Ende fällt die Algenwulst 58 auf eine Ladefläche 57 eines Lastkraftwagens 56 und kann nach der Aufnahme abtransportiert werden.

Durch die Aufnahme einer Algenwulst 58 mit der Vorrichtung 10 gelingt die Reinigung eines Filterbeckens 50 sehr effizient und schnell. Es müssen keine weiteren Geräte oder Vorrichtungen mit entsprechendem Zeit- und Kostenaufwand zur Reinigung des Filterbeckens 50 benutzt werden.

Entsprechend findet der Verfahrensablauf mit der oben beschriebenen Vorrichtung 10 statt: Bei der Aufnahme des verschmutzten Sands 54 mit der Räumvorrichtung 14 wird gleichzeitig der Algenteppich 52 mit den Trennscheiben 42 zerteilt und mit dem als Kamm ausgebildeten Schieber 32 zu einer Algenwulst 58 zusammengeschoben. Der verschmutzte Sand 54 wird während dieses Vorgangs mit dem Förderband 24 auf den hinterherfahrenden Lastkraftwagen 56 zum Abtransport geladen. Die Algenwulst 58 wird anschließend ebenfalls mit der Räumvorrichtung 14 aufgenommen und über das Förderband 24 zum Abtransport auf einen Lastkraftwagen 56 geladen.

## Patentansprüche

1. Vorrichtung (10) zum Entfernen von zusammenhängenden Algenteppichen (52) bei der Reinigung von Filterbecken (50) zur Trinkwasseraufbereitung mit einem Fahrzeug (12), an dem eine Räumvorrichtung (14) zum Aufnehmen und Abtransportieren, insbesondere einer Sandschicht vorgesehen ist, **dadurch gekennzeichnet, dass** zusätzlich ein im wesentlich quer zum Fahrzeug (12) angeordneter Schieber (32) zum Zusammenschieben des Algenteppichs (52) angebracht ist, wobei der Schieber (32) als Kamm ausgebildet ist.

2. Vorrichtung (10) zum Entfernen von zusammenhängenden Algenteppichen (52) bei der Reinigung von Filterbecken (50) zur Trinkwasseraufbereitung nach Anspruch 1, **dadurch gekennzeichnet, dass** der als Kamm ausgebildete Schieber (32) höhenverstellbar ausgebildet ist.

3. Vorrichtung (10) zum Entfernen von zusammenhängenden Algenteppichen (52) bei der Reinigung von Filterbecken (50) zur Trinkwasseraufbereitung nach einem der Ansprüche 1 oder 2, **dadurch gekennzeichnet, dass** der Schieber (32) Trennmittel (42) zum Zerteilen des Algenteppichs (52) aufweist.

4. Vorrichtung (10) zum Entfernen von zusammenhängenden Algenteppichen (52) bei der Reinigung von Filterbecken (50) zur Trinkwasseraufbereitung nach einem der Ansprüche 1 bis 3, **dadurch gekennzeichnet, dass** der als Kamm ausgebildete Schieber (32) lös- und entfernbar an dem Fahrzeug (12) angebracht ist.

5. Vorrichtung (10) zum Entfernen von zusammenhängenden Algenteppichen (52) bei der Reinigung von Filterbecken (50) zur Trinkwasseraufbereitung nach einem der Ansprüche 1 bis 4, **dadurch gekennzeichnet, dass** die Räumvorrichtung (14) zum Aufnehmen des zusammengeschobenen Algenteppichs ausgebildet ist.

6. Vorrichtung (10) zum Entfernen von zusammenhängenden Algenteppichen (52) bei der Reinigung von Filterbecken (50) zur Trinkwasseraufbereitung nach einem der Anspruche 1 bis 5, **dadurch gekennzeichnet, dass** die Räumvorrichtung höhen verstellbar ausgebildet ist.

7. Vorrichtung (10) zum Entfernen von zusammenhängenden Algenteppichen (52) bei der Reinigung von Filterbecken (50) zur Trinkwasseraufbereitung nach einem der Ansprüche 1 bis 6, **dadurch gekennzeichnet, dass** die Räumvorrichtung (14) eine Fördereinrichtung (22, 24), insbesondere ein Förderband (24), zum Abtransport von Algen aufweist.

8. Vorrichtung (10) zum Entfernen von zusammenhängenden Algenteppichen (52) bei der Reinigung von Filterbecken (50) zur Trinkwasseraufbereitung nach einem der Ansprüche 1 bis 7, **dadurch gekennzeichnet, dass** Mittel (25) zum Aufbereiten für den Transport und/oder der Lagerung der Algen vorgesehen sind.

9. Verfahren zum Reinigen von Filterbecken (50) bei der Trinkwasseraufbereitung mit einer Vorrichtung (10) gemäß einer der Ansprüche 1 bis 8, und folgenden Verfahrensschritten:
a) Aufnehmen einer Sandschicht mit einer Räumvorrichtung (14),
b) Abtransport der Sandschicht mit einer Fördereinrichtung (22, 24),
**dadurch gekennzeichnet, dass**
c) gleichzeitig der Algenteppich (52) mit einem als Kamm ausgebildeten Schieber (32) zu einer Algenwulst (58) zusammengeschoben wird.

10. Verfahren zum Reinigen von Filterbecken (50) bei der Trinkwasseraufbereitung nach Anspruch 9, **dadurch gekennzeichnet, dass** der Algenteppich (52) mit Trennmitteln (42) beim Zusammenschieben zerteilt wird.

11. Verfahren zum Reinigen von Filterbecken (50) bei der Trinkwasseraufbereitung nach einem der Ansprüche 9 oder 10, **dadurch gekennzeichnet, dass** die zusammengeschobene Algenwulst (58) mit der Räumvorrichtung (14) aufgenommen und/oder mit einer Fördereinrichtung (22, 24) abtransportiert wird.

## Claims

1. An apparatus (10) for removing continuous algae carpets (52) during cleaning filter basins (50) for drinking water purification with a vehicle (12) provided with a removal device (14) for gathering and removing in particular a layer of sand, **characterised in that** an additional slider (32) substantially disposed lateral to the vehicle (12) is attached for pushing together the algae carpet (52), wherein the slider (32) is formed as a comb.

2. An apparatus (10) for removing continuous algae carpets (52) during cleaning filter basins (50) for drinking water purification according to claim 1, **characterised in that** the slider (32) formed as a comb is height-adjustable.

3. An apparatus (10) for removing continuous algae carpets (52) during cleaning filter basins (50) for drinking water purification according to claim 1 or 2, **characterised in that** the slider (32) comprises dividing means (42) for dividing the algae carpet (52).

4. An apparatus (10) for removing continuous algae carpets (52) during cleaning filter basins (50) for drinking water purification according to one of claims 1 to 3, **characterised in that** the slider (32) formed as a comb is mounted to the vehicle (12) detachable and removable.

5. An apparatus (10) for removing continuous algae carpets (52) during cleaning filter basins (50) for drinking water purification according to one of claims 1 to 4, **characterised in that** the removal device (14) is adapted for gathering the pushed together algae carpet.

6. An apparatus (10) for removing continuous algae carpets (52) during cleaning filter basins (50) for drinking water purification according to one of claims 1 to 5, **characterised in that** the removal device (14) is height-adjustable.

7. An apparatus (10) for removing continuous algae carpets (52) during cleaning filter basins (50) for drinking water purification according to one of claims 1 to 6, **characterised in that** the removal device comprises a conveying device (22, 24), in particular a conveyor belt (24), for removing algae.

8. An apparatus (10) for removing continuous algae carpets (52) during cleaning filter basins (50) for drinking water purification according to one of claims 1 to 7, **characterised in that** means (25) for preparing the algae for transportation and/or storage are provided.

9. A method for cleaning filter basins (50) in drinking water purification with an apparatus (10) according to one of claims 1 to 8 and comprising the steps of:
a) gathering a layer of sand by a removal device (14);
b) removing the layer of sand by a conveyor device (22,24);
**characterised in that**
c) simultaneously the algae carpet (52) is pushed together to a algae bulge (58) by a slider (32) formed as a comb.

10. A method for cleaning filter basins (50) in drinking water purification according to claim 9, **characterised in that**, the algae carpet (52) is divided by dividing means (42) when being pushed together.

11. A method for cleaning filter basins (50) in drinking water purification according one of claims 9 or 10, **characterised in that**, the pushed together algae bulge (58) is gathered by the removal device (14) and/or removed by a conveyor device (22,24).

## Revendications

1. Dispositif (10) pour l'élimination d'ensembles de tapis d'algues (52) lors du nettoyage de bassins de filtration (50) pour le traitement de l'eau portable à l'aide d'un véhicule (12) sur lequel il est prévu un dispositif de déblayage (14) pour le ramassage et le transport, notamment d'une couche de sable, **caractérisé en ce qu'**une glissière (32) disposée essentiellement perpendiculairement au véhicule (12) est placée en complément afin de rassembler le tapis d'algues (52), ladite glissière (32) étant configurée sous forme de peigne.

2. Dispositif (10) pour l'élimination d'ensembles de tapis d'algues (52) lors du nettoyage de bassins de filtration (50) pour le traitement de l'eau potable selon la revendication 1, **caractérisé en ce que** la glissière (32) configurée sous forme de peigne est réglable en hauteur.

3. Dispositif (10) pour l'élimination d'ensembles de tapis d'algues (52) lors du nettoyage de bassins de filtration (50) pour le traitement de l'eau potable selon l'une quelconque des revendications 1 ou 2, **caractérisé en ce que** la glissière (32) présente des moyens de séparation (42) destinés à diviser le tapis d'algues (52).

4. Dispositif (10) pour l'élimination d'ensembles de tapis d'algues (52) lors du nettoyage de bassins de filtration (50) pour le traitement de l'eau potable selon l'une quelconque des revendications 1 à 3, **caractérisé en ce que** la glissière (32) configurée sous forme de peigne est placée sur le véhicule (12) de façon à pouvoir être démontée et déposée.

5. Dispositif (10) pour l'élimination d'ensembles de tapis d'algues (52) lors du nettoyage de bassins de filtration (50) pour le traitement de l'eau potable selon l'une quelconque des revendications 1 à 4, **caractérisé en ce que** le dispositif de déblayage (14) est configuré de sorte à ramasser le tapis d'algues ainsi rassemblé.

6. Dispositif (10) pour l'enlèvement d'ensembles de tapis d'algues (52) lors du nettoyage de bassins de filtration (50) pour le traitement de l'eau potable selon l'une quelconque des revendications 1 à 5, **caractérisé en ce que** le dispositif de déblayage présente une configuration réglable en hauteur.

7. Dispositif (10) pour l'élimination d'ensembles de tapis d'algues (52) lors du nettoyage de bassins de filtration (50) pour le traitement de l'eau potable selon l'une quelconque des revendications 1 à 6, **caractérisé en ce que** le dispositif de déblayage (14) présente des moyens de convoyage (22, 24), notamment un convoyeur (24) destiné au transport des algues.

8. Dispositif (10) pour l'élimination d'ensembles de tapis d'algues (52) lors du nettoyage de bassins de filtration (50) pour le traitement de l'eau potable selon l'une quelconque des revendications 1 à 7, **caractérisé en ce qu'**il est prévu des moyens (25) de préparation du transport et/ou du stockage des algues.

9. Procédé pour le nettoyage de bassins de filtration (50) pour le traitement de l'eau potable à l'aide d'un dispositif (10) selon l'une des revendications 1 à 8 ainsi que selon les étapes de procédé suivantes :
(a) Ramassage d'une couche de sable à l'aide d'un dispositif de déblayage (14),
(b) transport de la couche de sable à l'aide d'un dispositif de convoyage (22, 24),
**caractérisé en ce que**
(c) le tapis d'algues (52) est rassemblé simultanément sous forme de boudin d'algues (58) à l'aide d'une glissière (32) configurée sous forme de peigne.

10. Procédé pour le nettoyage de bassins de filtration (50) pour le traitement de l'eau potable selon la revendication 9, **caractérisé en ce que**, lors de son rassemblement, le tapis d'algues (52) est divisé à l'aide de moyens de séparation (42)

11. Procédé pour le nettoyage de bassins de filtration (50) pour le traitement de l'eau potable selon l'une quelconque des revendications 9 ou 10, **caractérisé en ce que** le boudin d'algues (58) ainsi rassemblées est ramassé à l'aide du dispositif de déblayage (14) et/ou transporté à l'aide d'un dispositif de convoyage (22, 24).
